Europäisches Patentamt

European Patent Office

Office européen des brevets

(11) Publication number: **0 210 329**
**A1**

## (12) EUROPEAN PATENT APPLICATION

(21) Application number: 86103749.7

(22) Date of filing: 19.03.86

(30) Priority: 27.06.85 JP 139100/85

(43) Date of publication of application:
04.02.87 Bulletin 87/06

(84) Designated Contracting States:
DE FR GB

(51) Int. Cl.⁴: **B65G 17/02** , B65G 15/08

(71) Applicant: **MACGREGOR FAR EAST LTD.**
**7-1, Hatchobori, 2-chome Chuo-ku**
**Tokyo(JP)**

(72) Inventor: **Kasai, Yoshinao**
**261, Kamaya-cho Hodogaya-ku**
**Yokohama City Kanagawa Prefecture(JP)**

(74) Representative: **Jochem, Bernd,**
**Dipl.-Wirtsch.-Ing. et al**
**Patentanwälte Beyer & Jochem**
**Staufenstrasse 36**
**D-6000 Frankfurt/Main(DE)**

(54) **Belt conveyor system.**

㋗ An endless hollow cylindrical belt conveyor system with an opening-closing apparatus for belt hangers is disclosed wherein the belt hanger (20) comprises a hanger body (21) and a pair of clamp arms (22, 23) each having an upper portion ($22_2$, $23_2$) generally elongating obliquely upwards and a lower portion ($22_1$, $23_1$) generally elongating downwards. The upper portions ($22_2$, $23_2$) are rotatively mounted to the hanger body (21) by bolts ($24_1$, $24_2$), respectively, secured to the hanger body (21) and spaced apart horizontally and the lower portions ($22_1$, $23_1$) cross each other so that the mating seal edge portions ($1_1$, $1_2$) of a rubber belt of which the belt conveyor is made can be fastend. The upper portions ($22_2$, $23_2$) of the clamp arms (22, 23) are connected together at points above the straight lines connecting the centers of the bolts ($24_1$, $24_2$) by coil springs ($27_1$, $27_2$) so that the lower portions ($22_1$, $23_1$) are adapted to come near. The clamp arms (22, 23) are urged to be swung in one or another direction about the bolts ($24_1$, $24_2$) against and by the force of the coil springs ($27_1$, $27_2$) when encountering a hanger opening device or a hanger closing device arranged along the belt conveyor.

FIG. 3

The present invention relates to an endless hollow cylindrical belt conveyor system comprising an endless rubber belt with mating seal portions near the edges, belt hanger means guided by a guide rail and arranged at intervals lengthwise of said endless hollow cylindrical belt conveyor to fasten said mating seal portions of said endless rubber belt by a pair of pivotally mounted clamp arms and means for pivoting the clamp arms between a clamping position and an open position.

As endless hollow cylindrical belt conveyor systems hitherto one has been publicly known wherein a substantially flat endless rubber belt has its one surface formed with mating seal portions near its lengthwise edges, respectively, i.e. a belt comprising a protrusion shaped along one of the edges and a groove shaped along the other of the edges so as to be engageable with the protrusion, the endless belt being adapted to form an endless hollow cylindrical member having substantially a circular cross section when the mating seal portions are sealed with the protrusion and the groove being engaged with each other by confronting the one surface together. The endless hollow cylindrical member has the mating seal portions fastened from outside the belt by the lower end portions of belt hangers disposed at adequate intervals in the longitudinal direction, each of the belt hangers being provided at its upper portion with pairs of trolley rollers that are rotatable about their horizontal axes, respectively. Each of the belt hangers are adapted to be supported on a guide rail having an I-shaped cross section, which is disposed at a desired height above the ground by being supported by adequately spaced vertical posts installed on the ground with each pair of the trolley rollers being laid on the lower flange of the I-shaped guide rail at its respective sides with the web of the guide rail interposed therebetween, the endless hollow cylindrical member thus hung from the I-shaped guide rail through the belt hangers. The belt hangers are connected together by an endless rope so that the endless hollow cylindrical member is adapted to be moved in a cycle as an endless hollow cylindrical belt conveyor by driving the hanger connecting endless rope with any suitable means.

The endless hollow cylindrical belt conveyor is further so designed that the lower portions of the belt hangers are adapted to be released by any suitable mechanism at loading or discharge stations provided at at least two portions along the cyclic movement path so that the engaging seal portions of the endless rubber belt are opened and flattened, whereby the article-to-be-conveyed can be put on the flattened rubber belt or an article conveyed by the sealed conveyor belt can be discharged out of the flattened belt. Thereafter, the rubber belt has its edges closed at the engaging seal portions so as to constitute a hollow cylindrical form, the engaging seal portions being fastened from the outside of the rubber belt by the lower portions of the belt hangers, and the cylindrical belt conveyor containing the article therein is transported to the discharge station or the empty conveyor belt is transported to the loading station.

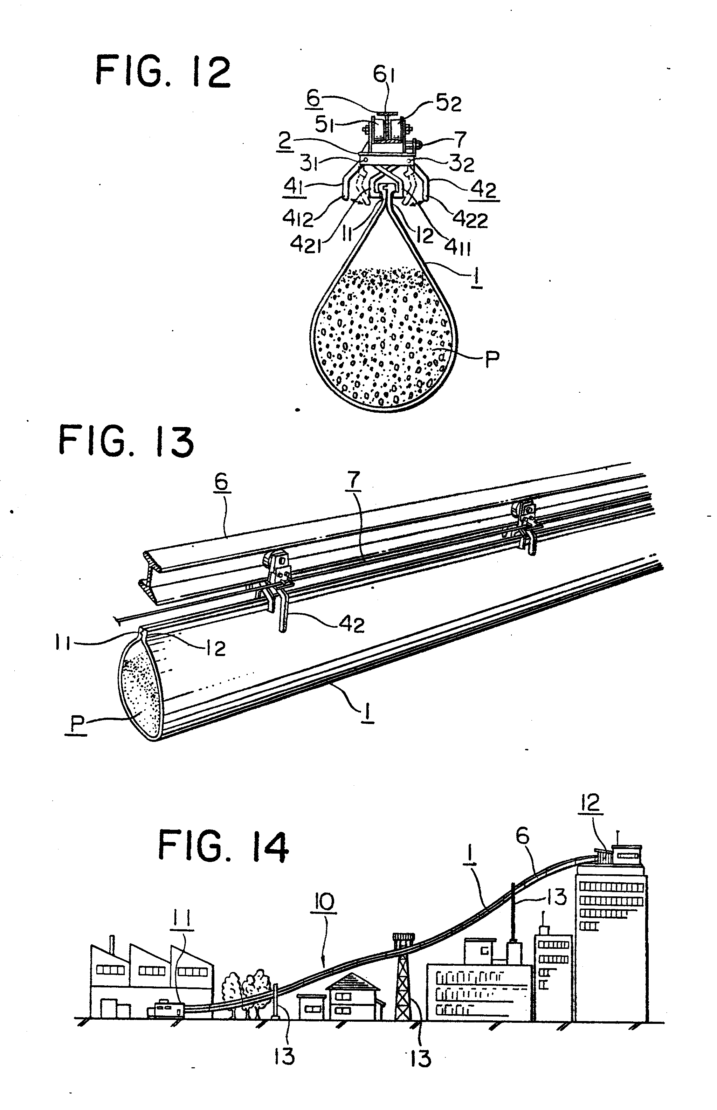

For reference a typical example of an endless hollow cylindrical conveyor system of this kind will be explained in reference to Figs. 12 and 13 of the attached drawings.

As shown in the drawings an endless rubber belt 1 formed with mating seal portions $1_1$ and $1_2$ on its inner surface near its lengthwise edges as a protrusion and a corresponding groove, respectively, has the mating seal portions $1_1$ and $1_2$ sealed together by being fastened together from the outside by the lower portions of belt hangers 2 arranged at intervals. A pair of clamp arms $4_1$ and $4_2$, each having an inverted V-shaped configuration and pivoted at their bent portion to the lower part of the body of the belt hanger 2 by pivots $3_1$ and $3_2$, respectively, which are horizontally spaced apart from each other, fasten the seal portions $1_1$, $1_2$ of the rubber belt 1 by the lower ends of their inner arm portions $4_{11}$ and $4_{21}$, respectively, which elongate substantially vertically downwards so as to intersect each other.

At the upper portion of the body of the belt hanger 2 a pair of confronting trolley rollers $5_1$ and $5_2$ are provided, each adapted to be rotatable about a horizontal axis, the rollers $5_1$, $5_2$ being mounted on a guide rail 6 having an I-shaped cross section installed at a suitable height from the ground by any suitable means. More particularly the trolley rollers $5_1$ and $5_2$ are rotatably mounted to ride on the lower flange of the I-shaped guide rail 6 such that the web $6_1$ of the guide rail 6 is interposed therebetween. The bodies of the belt hangers 2 are connected together with a belt hanger connecting endless rope 7 which is adapted to be driven causing the belt conveyor 1 to be moved in a cycle on the I-shaped guide rails 6. The clamp arms $4_1$ and $4_2$ are pivoted to the body of the belt hanger 2 in such a way that their inner arm portions $4_{11}$ and $4_{21}$ intersect each other and their lower ends are bent to confront each other so that they urge the mating seal portions $1_1$ and $1_2$ of the rubber belt 1 to be fastened together, while the outer arm portions $4_{12}$ and $4_{22}$ are bent substantially vertically downwards. These outer arm portions $4_{12}$ and $4_{22}$ are adapted to be actuated by any suitable means (not shown) provided at a station for loading and/or discharging the article-to-be-conveyed P by being swung towards each other to occupy the positions indicated by the phantom lines in Fig. 12, resulting in the swing of the inner arm portions $4_{11}$ and $4_{21}$ to

the positions indicated by the phantom lines so as to be spaced farther apart from each other, whereby the mating seal portion $1_1$, $1_2$ of the rubber belt 1 is released, with its further movement causing it to open flatwise.

Fig. 14 schematically shows an example of the installation 10 of the endless hollow cylindrical conveyor system as exemplified above. In the drawing the reference numerals 11 and 12 indicate the loading and/or discharge stations, respectively, and 13 indicates the posts for supporting the guide rail 6.

From the foregoing it will be understood that in an endless hollow cylindrical belt conveyor system of this type it is necessary to effect the fastening or release of the mating seal portion $1_1$, $1_2$ of the rubber belt 1 to or from the belt hangers 2 at the loading or discharge station 11 or 12 during the movement of the belt conveyor 1 in a cycle.

For this purpose apparatuses to actuate the clamp arms $4_1$, $4_2$ have been disclosed in e.g. U.S. Patent No. 3,999,646, Japanese Patent Publication No. 13127/1981, etc. but these apparatuses require quite complicated mechanisms. For example, the latter requires such a complicated mechanism that it must be provided with a pair of endless V belts disposed along the opposite sides of the course of the movement of the endless hollow cylindrical belt conveyor near its mating seal portions, etc. Therefore, this apparatus reveals such a defect that installation costs are increased due to the need for a complicated apparatus for effecting the fastening or release of the mating seal portion of the endless rubber belt.

It is a primary object of the present invention to provide an opening-closing apparatus for belt hangers in an endless hollow cylindrical belt conveyor system which is simple in constitution and yet reliable in operation.

It is another object of the present invention to provide an opening-closing apparatus for belt hangers in an endless hollow cylindrical belt conveyor system which is inexpensive to install and requires little maintenance.

In accordance with the present invention an endless hollow cylindrical belt conveyor system is provided wherein said belt hanger means comprise elastic means connected to the clamp arms and being arranged such that the line of action of the elastic means is on opposite sides of the pivotal axes of the clamp arms in the clamping position and the open position.

Other objects and advantages of the present invention will become more readily apparent from the following descriptions taken in connection with the accompanying drawings wherein are set forth by way of illustration and example certain embodiments of the present invention.

Fig. 1 is a perspective view indicating the operation of an opening-closing apparatus for belt hangers in an endless hollow cylindrical belt conveyor system in accordance with the present invention in the state of releasing the rubber belt;

Fig. 2 is a similar view to Fig. 1, but showing the belt hangers in the state of fastening the rubber belt;

Fig. 3 is a front elevational view of one embodiment of the belt hanger shown in Figs. 1 and 2;

Fig. 4 is a side elevational view of Fig. 3;

Fig. 5 is a schematic view illustrating the relationship between the stopper lever and the clamp arms in the belt hanger shown in Figs. 3 and 4;

Fig. 6 is an explanatory drawing illustrating the operation of the belt hanger shown in Figs. 3 and 4;

Fig. 7 is an explanatory drawing illustrating the relationship between the respective clamp arms of the belt hanger shown in Figs. 3 and 4 when force is applied to only one of the clamp arms;

Fig. 8 is a diagrammatical partial front elevational view of one example of an interlocking mechanism for the clamp arms in the belt hanger shown in Figs. 3 and 4;

Fig. 9 is a similar view to Fig. 8, but indicating another example of the interlocking mechanism;

Fig. 10 is a schematic view illustrating the arrangement of the respective elements in the case where a single coil spring is used for connecting the upper portions of the clamp arms at each side of the clamp body in the belt hanger shown in Figs. 3 and 4;

Fig. 11 is a schematic view similar to Fig. 10, but illustrating the case where two coil springs are used;

Fig. 12 is a cross-sectional view illustrating the relationship between a conventional endless hollow cylindrical belt conveyor and the belt hanger;

Fig. 13 is a perspective view of Fig. 12; and

Fig. 14 is a schematic view illustrating an example of installation of an endless hollow cylindrical belt conveyor system.

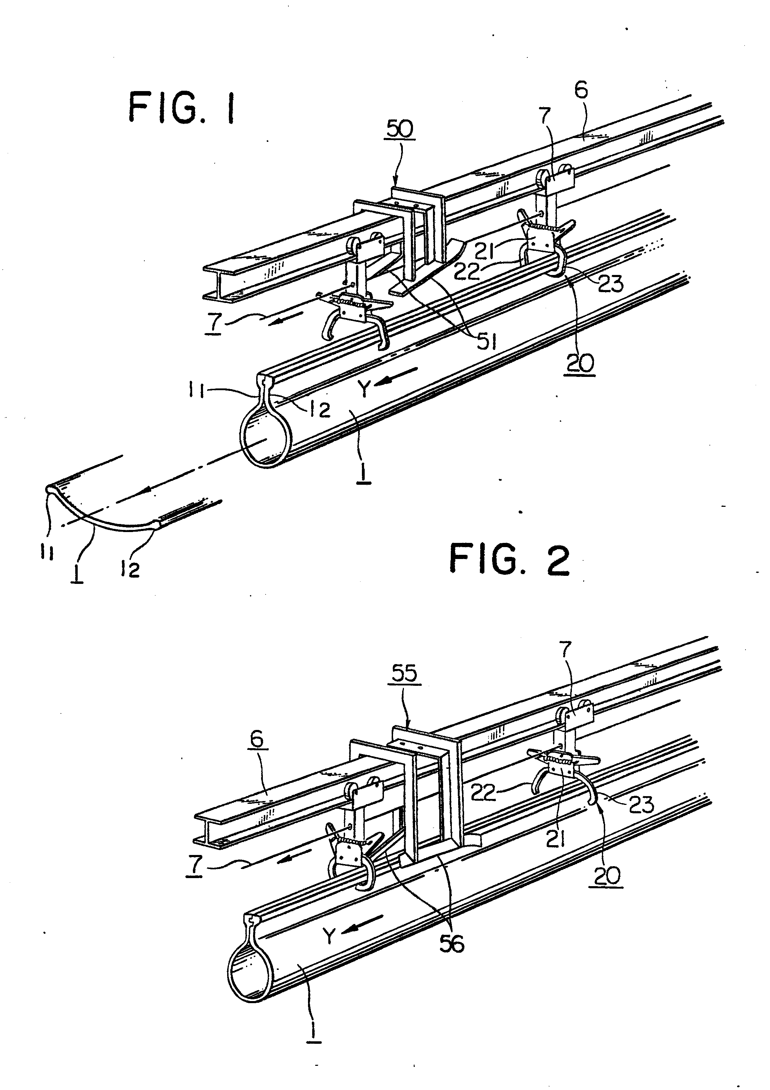

Referring is now made to Fig. 1 of the drawing wherein is shown the principle of the opening-closing apparatus for belt hangers in an endless hollow cylindrical belt conveyor system in accordance with the present invention when releasing the endless rubber belt 1 constituting the belt conveyor. As shown in Fig. 1, it is assumed that the rubber belt 1 and the belt hangers 20 are moving in a cycle in the direction as shown by the arrow Y. When a belt hanger 20 passes a hanger opening device 50 mounted to guide rail 6 clamp arms 22, 23 pivoted to the body of the belt hanger 20 and having their lower ends located at each side of the rubber belt 1, respectively, are pushed downwards by a pair of inclined rails 51 located at each side of rubber belt 1 and secured to the lower end of the hanger opening device 50, whereby the lower ends of the clamp arms 22, 23 are then urged open to release the mating seal portions $1_1$, $1_2$ of the endless rubber belt 1 so they may separate from each other, the rubber belt 1 substantially flattening. Inversely, when the flattened rubber belt 1 is to be closed, as shown in Fig. 2 the belt hanger 20 continuously moving along the guide rail 6 with the clamp arms 22, 23 being opened has the lower ends of the clamp arms 22, 23 closed by the action of the inclined rails 56 secured to the lower end of the hanger closing device 55 when the belt hanger 20 moves beneath it swinging lower portions of clamp arms 22, 23 towards each other and closing the lower ends of the clamp arms 22, 23 to put the mating seal portions $1_1$ and $1_2$ of the rubber belt 1 therebetween, said seal portions $1_1$ and $1_2$ of the rubber belt 1 having gradually become engaged with each other as the flattened rubber belt 1 moves in the direction indicated by the arrow Y. The belt 1 has been previously restored to a substantially hollow cylindrical form by a suitable means not shown.

Now the belt hanger 20 in accordance with the present invention will be explained in detail.

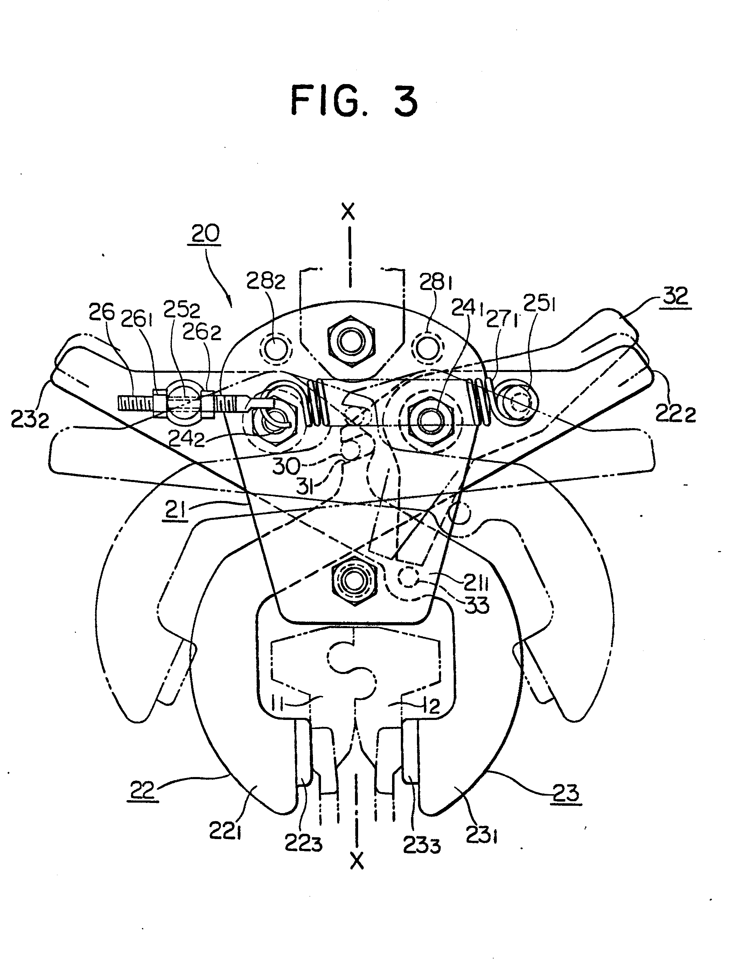

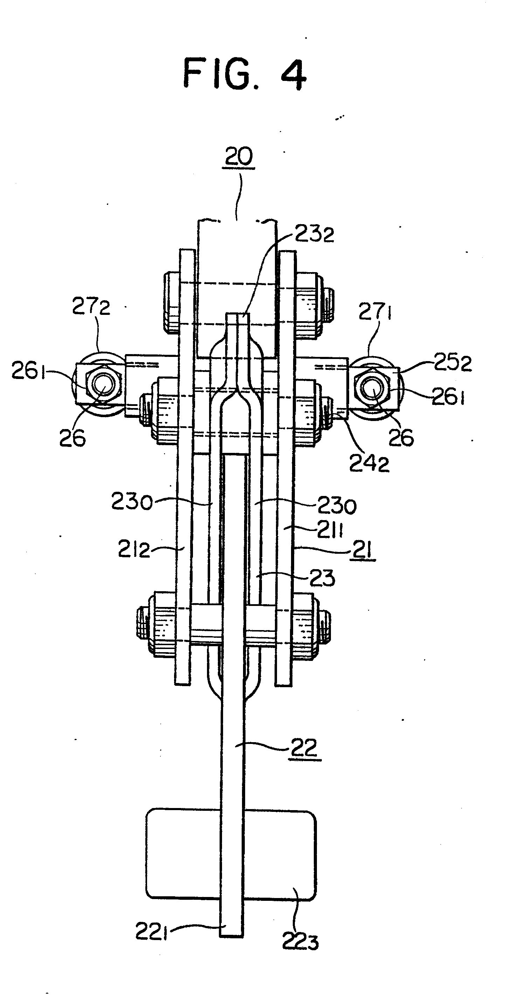

As shown in Figs. 3 and 4 the belt hanger 20 comprises a hanger body 21 composed of a pair of parallel spaced and rigidly secured plate members $21_1$, $21_2$, each having substantially an inverted triangular shape, and a pair of plate-like clamp arms 22, 23 each having substantially an L-shaped form and disposed within the space between the plate members $21_1$, $21_2$ such that the clamp arms 22, 23 are respectively pivoted at their upper portions $22_2$, $23_2$ to the clamp body 21 by pivots or bolts $24_1$, $24_2$, respectively, secured thereto so as to be symetric with respect to the perpendicular bisector X-X of the clamp body 21, whereby the lower portions $22_1$, $23_1$ of the clamp arms 22, 23 intersect each other and protrude outwards from the clamp body 21 substantially downwards, while the upper portions $22_2$, $23_2$ of the clamp arms 22, 23 are adapted to protrude outwards from the clamp body 21 substantially obliquely upwards, but in opposite predetermined lengths, respectively.

In the embodiment shown the clamp arm 22 is shown as being integrally constituted, whereas the other clamp arm 23 is shown as being composed of two parallel spaced plate members $23_0$ with their upper and lower end portions being respectively bonded together, whereby the intermediate portions are spaced apart by a distance substantially corresponding to the thickness of the integral clamp arm 22 so that the clamp arm 22 can freely move therethrough. See Fig. 4. The clamp arms 22, 23 have rectangular fastening plates $22_3$, $23_3$ rigidly secured at their lower ends, respectively, so as to vertically confront each other at the time of fastening the mating seal portions $1_1$, $1_2$ of the rubber belt I from the outside.

The clamp arms 22, 23 are provided on their upper portions $22_2$, $23_2$ with studs $25_1$, $25_2$, respectively, perpendicular thereto and outside the clamp body 21 such that the centers of the studs $25_1$, $25_2$ lie on a horizontal line above the horizontal line connecting the centers of the bolts $24_1$, $24_2$ and are symetric with respect to the perpendicular bisector X-X of the clamp body 21. A threaded shaft 26 is loosely passed one of the studs $25_2$ at right angles to the perpendicular bisector X-X, i.e. horizontally, and two nuts $26_1$, $26_2$ are secured to the threaded shaft 26 so as to interpose the stud therebetween, the nuts $26_1$, $26_2$ serving to rigidly secure the threaded shaft 26 to the stud $25_2$. Disposed between the stud $25_1$ and the end of the threaded shaft 26 opposite thereto are a pair of coil springs $27_1$ and $27_2$ as elastic elements with the clamp body 21 being interposed between them so as to pull the upper portions $22_2$, $23_2$ of the clamp arms 22, 23 toward each other. Therefore, in this state, as shown in Fig. 3 by the solid lines the lower portions $22_1$, $23_1$ of the clamp arms 22, 23, respectively, are caused to fasten the mating seal portions $1_1$, $1_2$ of the rubber belt 1 from the outside through the fastening plates $22_3$, $23_3$. The threaded shafts 26 are for adjusting the tension of the coil springs $27_1$, $27_2$.

The clamp body 21 rigidly secures stoppers $28_1$, $28_2$ bridging the confronting plate members $21_1$, $21_2$ to limit the pull action of the coil springs $27_1$, $27_2$ in such a manner that upon abutment of the upper edges of the upper portions $22_2$, $23_2$ of the clamp arms 22, 23 against the stoppers $28_1$, $28_2$, respectively, the rotational movements of the clamp arms 22, 23 about the pivots $24_1$, $24_2$, respectively, due to the action of the coil springs $27_1$, $27_2$ are stopped. Further, near the upper mid portion of one of the clamp arms 23 a pin 30 is secured perpendicularly thereto, while the other of the clamp arms 22 is formed with an open slot 31 so that the slot 31 is loosely engaged by the pin 30, whereby the pin 30 and slot 31 are adapted to be always in mesh with each other even when the clamp arms 22, 23 swing about the bolts $24_1$, $24_2$, respectively. As described later, the pin 30 and the slot 31 act as an interlocking mechanism to link the swing movements of the two clamp arms 22, 23.

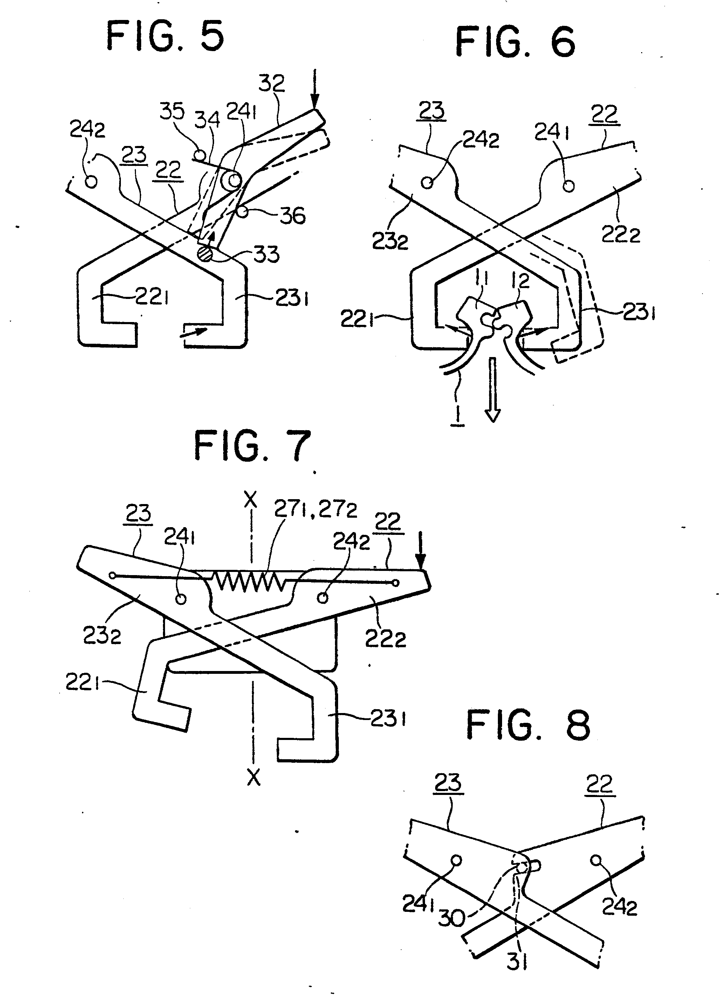

The bolt 24, which rotatably mounts one of the clamp arms 22 to the clamp body 21, swingably mounts a stopper lever 32 having generally a boomerang like form, at substantially the mid portion of said lever, the lower end portion of which is adapted to abut against a stopper pin 33 fixedly secured to the other of the clamp arms 23 at right angles thereto when the lower portions $22_1$, $23_1$ of the clamp arms 22, 23, respectively, come close together. For this purpose, as shown in Fig. 5, a torsion spring 34 is wound around the bolt $24_1$ such that one end of the spring 34 is supported by a stopper pin 35 secured to the hanger body 21, while the other end thereof is supported at a portion of the stopper lever 32. At this state the stopper lever 32 under the action of the torsion spring 34 has its upper edge protrude upwards somewhat over the upper edge of the upper portion $22_2$ of the clamp arm 22. In order to maintain the stopper lever 32 in this state the lower edge thereof is adapted to abut against a pin 36 secured to the hanger body 21 at right angles thereto. See also Fig. 5. Although not shown in the drawings the hanger body 21 is provided at its upper portion with a pair of trolley rollers at each side rotatable about horizontal shafts so that the hanger body 21 can be movably mounted on the I-shaped guide rail 6 with the respective pairs of the trolley rollers being laid on the lower flange of the guide rail 6 with the web thereof being interposed therebetween as shown in Figs. 1 and 2.

The operation of the belt hanger 20 in accordance with the present invention having such a constitution will now be explained below. Reference should be also made to Figs. 1 and 2.

When it is desired to release the belt hanger 20 as outlined above in reference to Fig. 1, as the belt conveyor 1 moves in a cycle the upper edges of the upper portions $22_2$, $23_2$ of the clamp arms 22, 23 respectively, come into contact with the upper end portions of the pair of inclined confronting rails 51, respectively, which are fixedly secured to each side of the lower end of the hanger opening device 50, respectively, which is in turn installed on the guide rail 6. The inclined rails 51 descend in the direction of movement of the belt conveyor 1 indicated by the arrow Y, so that the clamp arms 22, 23 are forced to be swung about the bolts $24_1$, $24_2$, respectively, relative to the hanger body 21 as the upper edges of the upper portions of the clamp arms 22, 23 are shifted along under the surfaces of the inclined rails 51. As a result the coil springs $27_1$, $27_2$ connected between the stud 25, and the end of the threaded shafts 26 secured to the studs $25_2$ are gradually stretche, and, when the imaginary straight lines connecting the centers of the stud $25_1$, $25_2$ pass the imaginary straight lines connecting the centers of the bolts $24_1$, $24_2$ constituting the pivotal points of the clamp arms 22, 23 to the clamp body 21, i.e. the dead points of the coil spring $27_1$, $27_2$, the coil springs $27_1$, $27_2$ abruptly contract to pull upon the studs $25_1$, $25_2$, resulting in an abrupt swing of the clamp arms 22, 23 about the bolts $24_1$, $24_2$, the respective pivotal centers thereof, the clamp arms 22, 23 occupy the positions indicated by the phantom lines in Fig. 3, so that the confronting ends of the lower portions $22_1$, $23_1$ are caused to be separated from each other. At the time of the contact of the upper edges of the upper portions $22_2$, $23_2$ of the clamp arms 22, 23 with the inclined rails 51 of the hanger opening device 50 the upper edge of the stopper lever 32 also comes into contact with the inclined rail 51 so that it swings about the bolt $24_1$ constituting its pivotal point to the hanger body 21 against the action of the torsion spring 34, whereby the engagement of the lower end of the stopper lever 32 with the stopper pin 33 secured to the clamp arm 23 is released so that the above opening operation of the clamp arms 22 and 23 are by no means obstructed. In other words it may be said that the stopper lever 32 always acts to ensure the positive closing of the clamp arms 22, 23 so that the release of the stopper lever 32 from the stopper pin 33 is required in order to open the clamp arms 22, 23. Further the stopper lever 32 serves to prevent the clamp arms 22, 23 from being opened and thus prevents the rubber belt 1 from accidentally coming out of the belt hanger 20 because of some force applied to the clamp arms 22, 23 which might otherwise cause them to be opened. This could be due to such forces as abnormal deformation of the rubber belt 1 during the movement in a cycle of the belt conveyor 1, etc. That is, if it is assumed that the stopper lever 32 were not provided, as shown in Fig. 6 both clamp arms 22, 23 of the belt hanger 20 may be free to be released, resulting in the release of the mating seal portions $1_1$, $1_2$ of the rubber belt 1. However, with the provision of the stopper lever the possibility of the rubber belt 1 coming out from the belt hanger 20 can be prevented. Although in Figs. 3 and 5 the stopper lever 32 is indicated as being mounted only on the clamp arm 22, a stopper lever 32 can in principle be provided for both clamp arm 22, 23, respectively.

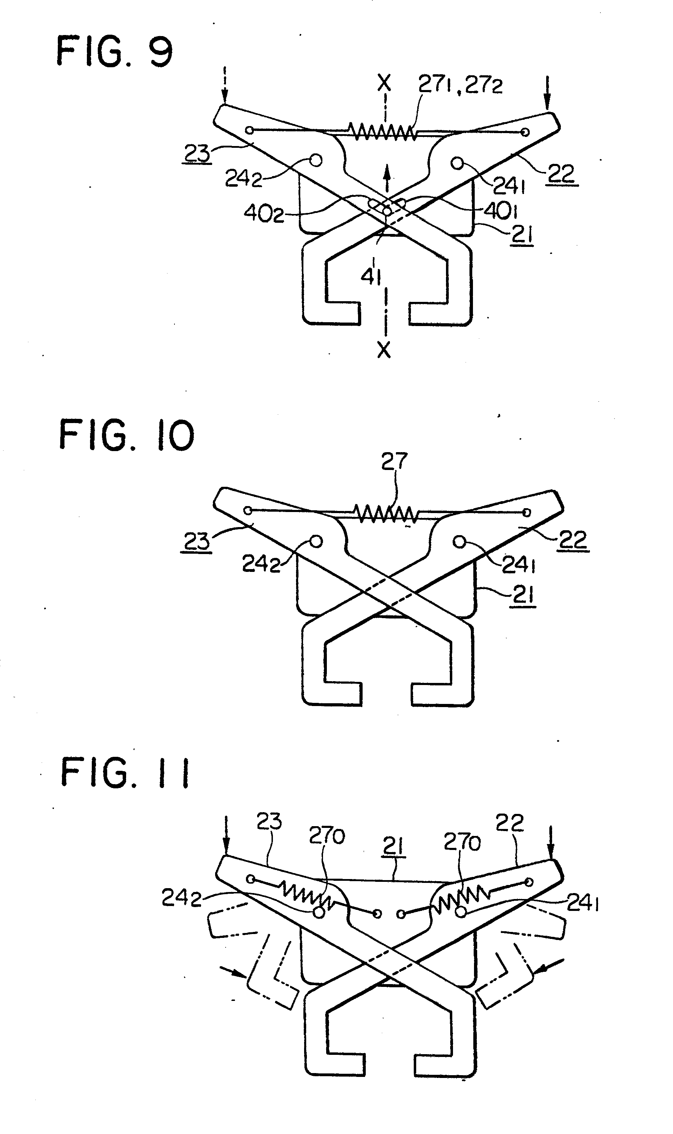

The pin 30 and the slot 31 provided for the clamp arms 22, 23, respectively, act as an interlocking mechanism to prevent either of the arms 22, 23 from being opened or closed independent from the other when unequal forces are applied to the upper edges of the upper portions $22_2$, $23_2$ of the clamp arms 22, 23 by having the pin 30 and the slot 31 mesh with each other to transmit the movement of either one of the clamp arms 22, 23 to the other. See also Fig. 8. That is, if it is assumed that the pin 30 and the slot 31 were not provided, as shown in Fig. 7, for example, when the upper edge of the upper portion $22_2$ of only one of the clamp arms 22 is pushed down due to the application of an eccentric or one-sided force thereto as indicated by the arrow the lower end of the lower portions $22_1$ only is moved away from the lower end of the lower portion $23_1$ of the other clamp arm 23, but, if the pin 30 and the slot 31 are, as shown in Fig. 8, provided for the clamp arms 23 and 22, respectively, even though only the clamp arm 22 is pushed down as indicated in Fig. 7 by the arrow the force applied to this clamp arm 22 is also transmitted to the other clamp arm 23 through the slot 31 formed in the clamp arm 22 by the pin 30 secured to the clamp arm 23 at about the same magnitude. Therefore, the opening of only one of the clamp arm 22 or 23 is effectively prevented. This also applies in a similar fashion to the case of the closing of the clamp arms 22, 23. Alternatively, the same operation can be achieved by an arrangement shown in Fig. 9 wherein the clamp arms 22, 23 have slots $40_1$, $40_2$ formed at their intersecting portions, respectively, so as to cross each other, and a pin 41 is loosely fit into both slots $40_1$, $40_2$ at their intersection so as to interconnect the clamp arms 22, 23 to each other.

In the embodiments described and illustrated above, although the studs $25_1$ and $25_2$ are connected only by a single coil spring $27_1$ and $27_2$ at both sides of the hanger body 21 it may be conceivable that instead, as shown in Fig. 11, two coil springs $27_0$ and $27_0$ may be disposed on both sides of the clamp body 21 such that the coil springs $27_0$ are arranged between the hanger body 21 and the clamp arm 22, and between the hanger body 21 and the clamp arm 23, respectively, while suitably maintaining the relationships between the clamp arms 22, 23 and the bolts $24_1$, $24_2$ constituting the pivotal points of the clamp arms 22, 23 to the hanger body 21. However, it is generally preferable to utilize a single coil spring $27_1$ or $27_2$ at each side of the hanger body 21 since this makes the constitution simple and also the fastening and release of the clamp arms 22, 23 more positive.

The operation of the opening-closing apparatus for belt hangers in an endless hollow belt conveyor system in accordance with the present invention has been described above in the case of the opening of the clamp arms 22, 23. In the case where the clamp arms 22, 23 which have been kept open are to be closed, as already explained in reference to Fig. 2 the lower portions $22_1$, $23_1$ of the clamp arms 22, 23, respectively, are urged inwards from the outside as the lower portions $22_1$, $23_1$ come into contact with the pair of the inclined rails 56 mounted to the lower end of the hanger closing device 55 when the clamp arms 22, 23 are moved together with the hanger body 21. This is because the inclined rails 56 are disposed substantially horizontal such that the distance between the confronting rails 56 is made to gradually narrow in the direction of the movement in a cycle of the belt conveyor 1 as indicated by the arrow Y. Thus, as the lower ends of the lower portions $22_1$, $23_1$ of the clamp arms 22, 23, respectively, are closed the mating seal portions $1_1$ and $1_2$ of the rubber belt 1 are pushed from the outside by the lower ends of the lower portions $22_1$, $23_1$ of the clamp arms 22, 23 to thereby fasten the mating seal portions $1_1$ and $1_2$ together. Also in this case, when the lines connecting the centers of studs $25_1$ and $25_2$ pass the straight horizontal lines connecting the centers of the bolts $24_1$, $24_2$, the pivotal points of the clamp arms 22, 23 to the hanger body 21, i.e. the dead points of the coil springs $27_1$, $27_2$ during the swing of the clamp arms 22, 23 about the bolts $24_1$, $24_2$ the coil springs $27_1$, $27_2$ act to abruptly swing the clamp arms 22, 23 so as to abruptly fasten the mating seal portions of the rubber belt 1.

It is to be understood that although certain forms of the present invention have been illustrated and described it is not to be limited thereto except insofar as such limitations are discribed in the following claims:

## Claims

1. In an endless hollow cylindrical belt conveyor system comprising and endless rubber belt - (1) with mating seal portions ($1_1$, $1_2$) near the edges, belt hanger means (20) guided by a guide rail (6) and arranged at intervals lengthwise of said endless hollow cylindrical belt conveyor to fasten said mating seal portions ($1_1$, $1_2$) of said endless rubber belt (1) by a pair of pivotally mounted clamp arms (22, 23) and means (50, 55) for pivoting the clamp arms (22, 23) between a clamping position and an open position, wherein said belt hanger means (20) comprise elastic means ($27_0$, $27_1$, $27_2$) connected to the clamp arms (22, 23) and being arranged such that the line of action of the elastic means ($27_0$, $27_1$, $27_2$) is on opposite sides of the pivotal axes ($24_1$, $24_2$) of the clamp arms (22, 23) in the clamping position and the open position.

2. A belt conveyor system as claimed in claim 1, wherein the pivotal axes ($24_1$, $24_2$) of the clamp arms (22, 23) are secured to a hanger body (21) and horizontally spaced apart, and the clamp arms (22, 23) intersect with each other and have substantially an L-shaped configuration with an upper portion ($22_2$, $23_2$) and a lower portion ($22_1$, $23_1$) protruding outwards from said hanger body (21), said upper portion ($22_2$, $23_2$) of said clamp arms - (22, 23) being pivoted to said hanger body (21) by said pivotal axes ($24_1$, $24_2$), the lower parts ($22_3$, $23_3$) of said lower portions ($22_1$, $23_1$) of said clamp arms (21) confronting each other so as to fasten or release said mating seal portions ($1_1$, $1_2$) of said rubber belt (1), said elastic means ($27_0$, $27_1$, $27_2$)

connecting said respective upper portions ($22_2$, $23_2$) of said clamp arms (22, 23) together such that when said lower parts ($22_3$, $23_3$) of said lower portions ($22_1$, $23_1$) of said clamp arms (22, 23) fasten said mating seal portions ($1_1$, $1_2$) of said rubber belt (1) the straight line connecting the connecting points of said elastic means ($27_0$, $27_1$, $27_2$) to said upper portions ($22_2$, $23_2$) lies above the straight line connecting said pivotal axes ($24_1$, $24_2$), a belt hanger opening device (50) being adapted to be mounted to said guide rail (6) and to act to release said mating seal portions ($1_1$, $1_2$) of said rubber belt (1) when it is in a fastened state, and a belt hanger closing device (55) being adapted to be mounted to said guide rail (6) and to act to fasten said mating seal portions ($1_1$, $1_2$) of said rubber belt (1) when it is in an open state.

3. A belt conveyor system as claimed in claim 2 wherein said hanger body (21) comprises a pair of parallel spaced plate members ($21_1$, $21_2$) each having substantially an inverted triangular shape, and said clamp arms (22, 23) are disposed within the space formed between said plate members - ($21_1$, $21_2$).

4. A belt conveyor system as claimed in claim 1 wherein at least one stopper lever (32) is swingably mounted to said upper portion ($22_2$, $23_2$) of either one of said clamp arms (22, 23) so that a part of said stopper lever (32) acts to constrain a stopper pin (33) secured to the other of said clamp arms (22, 23) at the time when said lower parts - ($22_3$, $23_3$) of said lower portions ($22_1$, $23_1$) of said clamp arms (22, 23) fasten said mating seal portions ($1_1$, $1_2$) of said rubber belt (1).

5. A belt conveyor system as claimed in claim 4 wherein said stopper lever (32) is swingably mounted to one of said pivotal axes ($24_1$, $24_2$) which swingably mount said clamp arms (22, 23) to said hanger body (21) and elastically held by a torsion spring (34) wound around said one pivotal axes ($24_1$).

6. A belt conveyor system as claimed in claim 1 wherein said clamp arms (22, 23) are equipped with interlocking means (30, 31; $40_1$, $40_2$, 41) so that their swing motions are linked with each other.

7. A belt conveyor system as claimed in claim 6 wherein said interlocking means comprises a pin (30) secured to one of said clamp arms (22, 23) and a slot (31) formed in the other of said clamp arms (22, 23) so as to loosely receive said pin (30) therein.

8. A belt conveyor system as claimed in claim 6 wherein said interlocking means comprises slots ($40_1$, $40_2$) formed in said upper portions ($22_2$, $23_2$) of said clamp arms (22, 23), respectively, so as to cross each other and a pin (41) loosely interconnecting said slots ($40_1$, $40_2$) to each other.

9. A belt conveyor system as claimed in claim 2 wherein said hanger opening device (50) is provided with a pair of inclined rails (51) adapted to be contacted by the upper edges of said upper portions ($22_2$, $23_2$) of said clamp arms (22, 23), said inclined rails (51) being inclined continuously downwards in the direction of the movement of said belt conveyor (1).

10. A belt conveyor system as claimed in claim 2 wherein said hanger closing device (55) is provided with a pair of horizontal rails (56) adapted to be contacted by the outer edge portions of said lower portions ($22_1$, $23_1$) of said clamp arms (22, 23), the space between said guide rails (56) being continuously narrowed in the direction of the movement of said belt conveyor (1).

11. A belt conveyor system as claimed in claim 1 wherein said guide rail (6) has generally an I-shaped cross section, and said hanger means (20) is provided at each side of the upper portion thereof with a pair of trolley rollers ($5_1$, $5_2$) so as to confront each other, each of said trolley rollers ($5_1$, $5_2$) being adpated to be rotated about a horizontal axis, whereby said pair of trolley rollers ($5_1$, $5_2$) are put on each side of the lower flange of the guide rail (6) with the web (61) thereof being interposed therebetween.

12. A belt conveyor system as claimed in claim 4 wherein said stopper lever (32) is adapted to be operated by said hanger opening device (50).

# FIG. I

# FIG. 2

# FIG. 3

# FIG. 4

# FIG. 5

# FIG. 6

# FIG. 7

# FIG. 8

FIG. 9

FIG. IO

FIG. II

## FIG. 12

## FIG. 13

## FIG. 14

| | DOCUMENTS CONSIDERED TO BE RELEVANT | | EP 86103749.7 |

| Category | Citation of document with indication, where appropriate, of relevant passages | Relevant to claim | CLASSIFICATION OF THE APPLICATION (Int. Cl.4) |
|---|---|---|---|
| A | US - A - 3 999 646 (YOSHIDA) <br> * Claim 3; fig. 7 * <br> -- | 1,2 | B 65 G 17/02 <br> B 65 G 15/C8 |
| A | US - A - 2 365 762 (JOHNS) <br> * Fig. 2 * <br> -- | 1 | |
| A | DE - A1 - 3 224 335 (PAURAT) <br> * Fig. 2 * <br> ---- | 1 | |
| | | | **TECHNICAL FIELDS SEARCHED (Int. Cl.4)** <br><br> B 65 G |

The present search report has been drawn up for all claims

| Place of search | Date of completion of the search | Examiner |
|---|---|---|
| VIENNA | 05-09-1986 | EAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82